# EUROPÄISCHE PATENTSCHRIFT

(11) **EP 0 986 342 B1**
(45) Veröffentlichungstag und Bekanntmachung des Hinweises auf die Patenterteilung: **03.11.2004**
(21) Anmeldenummer: 98925617.7
(22) Anmeldetag: 19.05.1998
(51) Int. Cl.: A61C 8/00

(54) **VERPACKUNG MIT EINEM BEHÄLTER UND EINEM IN DIESEM ANGEORDNETEN DENTALIMPLANTAT**
CASE WITH A RECEPTACLE AND A DENTAL IMPLANT ARRANGED THEREIN
CONDITIONNEMENT COMPORTANT UN RECIPIENT ET UN IMPLANT DENTAIRE DISPOSE DANS CELUI CI

(30) Priorität: 26.05.1997 CH 123397
(43) Veröffentlichungstag der Anmeldung: 22.03.2000
(73) Patentinhaber: Straumann Holding AG, 4437 Waldenburg (CH)
(72) Erfinder: Sutter, Franz, 4435 Niederdorf (CH)
(74) Vertreter: Modiano, Guido, Dr.-Ing.
(86) Internationale Anmeldenummer: PCT/EP1998/002938
(87) Internationale Veröffentlichungsnummer: WO 1998/053755

(56) Entgegenhaltungen:
- US-A- 5 062 800
- US-A- 5 368 160

## Beschreibung

### Technisches Gebiet

Die Erfindung betrifft eine Verpackung oder Vorrichtung mit einem zwei lösbar miteinander verbundene Behälterteile aufweisenden Behälter und einem in diesem angeordneten Dentalimplantat.

### Stand der Technik

Eine aus dem Buch "Orale Implantologie" André Schroeder, Franz Sutter, Daniel Buser und Gisbert Krekeler, 2. Auflage, 1994, Georg Thieme Verlag, Stuttgart/New York, Seiten 223 bis 225 bekannte, sterile Verpackung für ein Dentalimplantat besitzt einen Behälter mit einer Ampulle und einen Deckel. Im Behälter ist eine innere Ampulle mit einem inneren Deckel angeordnet. Die innere Ampulle enthält eine metallische, käfigartige Halterung, die das Dentalimplantat hält. Das Implantat hat beispielsweise ein zum Einschrauben in einen Knochen vorgesehenes Aussengewinde und ein axiales Loch mit einem Innengewinde. Beim Auspacken und Verwenden eines solchen Implantats wird zuerst die äussere Ampulle geöffnet, die innere Ampulle herausgeleert, die innere Ampulle geöffnet und ein Eindrehinstrument zuerst von Hand lose in das Innengewinde eingeschraubt. Danach schiebt man eine Ratsche auf einen Teil des Eindrehinstruments, zieht einen durch die Ratsche hindurch ragenden, einen Sechskantkopf aufweisenden Teil des Eindrehinstruments mit einem Gabelschlüssel fest an und löst die Halterung der Verpackung. Nun stellt man die Drehrichtung der Ratsche um, hebt das Implantat aus der inneren Ampulle heraus und schraubt es in den Knochen ein.

Diese bekannte Verpackung hat die Nachteile, dass die relativ viele Bestandteile aufweist und dass vor allem viele Arbeitsschritte nötig sind, um das Implantat aus der Verpakkung herauszunehmen, mittels der Ratsche in den Mund eines Patienten einzuführen und einzuschrauben. Zudem muss das Eindrehinstrument nach dem Einschrauben des Implantats in einen Knochen wieder aus dem Implantat herausgeschraubt werden. Die grosse Anzahl von Arbeitsschritten und insbesondere das Einschrauben eines Eindrehinstruments in das Implantat vergrössern ferner die Gefahr, dass Keime zum Implantat gelangen.

Die bekannte Verpackung ergibt auch ähnliche Nachteile, wenn das Implantat nicht in einen Knochen eingeschraubt, sondern in diesen eingeschlagen werden soll.

US 5062 800 offenbart eine Verpackung, die alle Merkmale des Oberbegriffs von Anspruch 1 aufweist.

### Abriss der Erfindung

Der Erfindung liegt die Aufgabe zugrunde, eine Verpackung bzw. Vorrichtung zu schaffen, die Nachteile der bekannten Verpackung vermeidet und insbesondere ermöglicht, ein Implantat mit wenigen Arbeitsschritten aus der Verpackung herauszunehmen und in einen Knochen im Unter- oder Oberkiefer eines Patienten einzusetzen.

Die Aufgabe wird gemäss der Erfindung gelöst durch eine Verpackung gemäß Anspruch 1.

Vorteilhafte Ausgestaltungen des Erfindungsgegenstandes gehen aus den abhängigen Ansprüchen hervor.

### Kurze Beschreibung der Zeichnungen

Der Erfindungsgegenstand wird anschliessend anhand von in den Zeichnungen dargestellten Ausführungsbeispielen erläutert. In den Zeichnungen zeigt
Fig. 1 einen Axialschnitt durch eine Verpackung mit einem Dentalimplantat und einem Halter,
Fig. 2 einen Ausschnitt aus Fig. 1 in grösserem Massstab,
Fig. 3 eine Schrägansicht eines Implantats und eines anderen, von diesem getrennten Halters,
Fig. 4 einen Axialschnitt durch ein Implantat und in der linken Hälfte durch den Halter gemäss Fig. 3 sowie in der rechten Hälfte durch einen anderen Halter und
Fig. 5 einen Axialschnitt durch ein Implantat und noch einen anderen Halter.

### Beschreibung der bevorzugten Ausführungsbeispiele

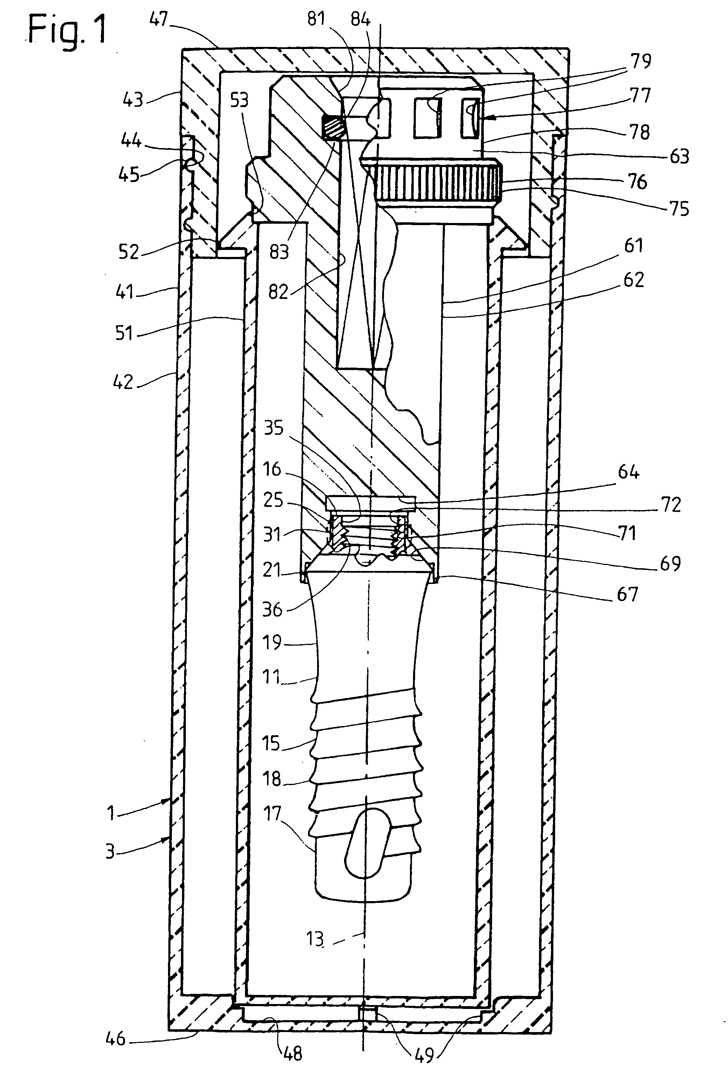

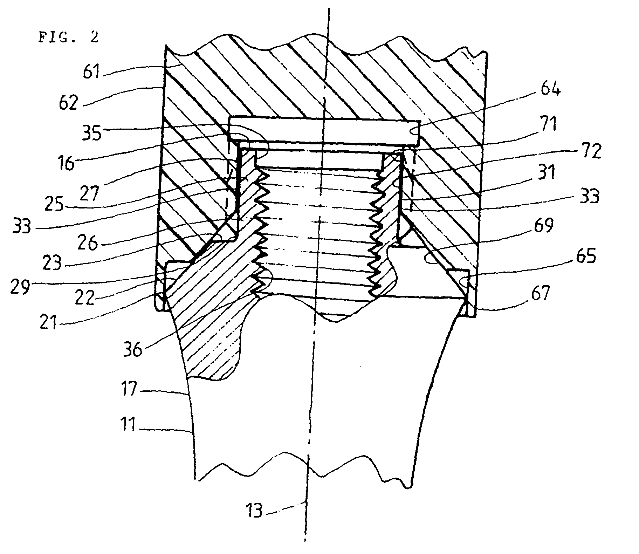

Die in den Figuren 1 und 2 ersichtliche Vorrichtung 1 weist eine Verpackung 3 mit einem Dentalimplantat 11 auf. Dieses und die gesamte Verpackung 3 sind im allgemeinen rotationssymmetrisch zu einer Achse 13. Das Dentalimplantat 11 weist eine zur Verankerung in einem Knochen des Unterkiefers oder Oberkiefers eines Patienten vorgesehene Verankerungspartie 15 und eine zum Herausragen aus dem Knochen bestimmte Aussenpartie 16 auf. Das Implantat 11 besitzt einen im allgemeinen zylindrischen Abschnitt 17. Dieser ist mit einem Aussengewinde 18 versehen, das beispielsweise selbstschneidend ist, jedoch auch aus einem nicht-selbstschneidenden Paarungs-Gewinde bestehen könnte. An den zylindrischen Abschnitt 17 schliesst ein sich nach oben erweiternder, trompetenförmiger Abschnitt 18 an, dessen unterer Teilabschnitt zusammen mit dem zylindrischen Abschnitt 17 die Verankerungspartie 15 bildet.

Am oberen, weiteren Ende des trompetenförmigen Abschnitts 19 ist eine Schulter 21 mit einer nach oben gegen innen geneigten, konischen Schulterfläche 22 vorhanden. Diese bildet mit der Achse 13 einen Winkel von 40° bis 50° und beispielsweise 45°. An das obere, engere Ende der konischen Schulterfläche 22 schliesst eine ebene, zur Achse 3 rechtwinklige Ringfläche 23 an.

Ein Kopf 25 ragt von der Ringfläche 23 weg nach oben und bildet zusammen mit dem oberen Ende des trompetenförmigen Abschnitts 19 sowie der Schulter 21 die Aussenpartie 16 des Implantats 11. Der Kopf 25 hat einen im wesentlichen zur Achse 13 parallelen Kopfabschnitt 26 und einen sich von diesem weg nach oben zum freien Ende des Kopfs und damit zum oberen Ende des ganzen Implantats hin verjüngenden, im allgemeinen konischen Kopfabschnitt 27. Der zur Achse parallele Kopfabschnitt 26 ist durch eine im Axialschnitt konkav gebogene Ringnut 29 vom oberen Ende der Schulter 21 abgegrenzt. Der Kopf hat an seinem freien Ende eine ebene, ringförmige Stirnfläche. Die beiden Kopfabschnitte 26, 27 sind im allgemeinen rotationssymmetrisch zur Achse 13 und/oder haben zumindest je eine zur Achse rotationssymmetrische, nämlich zylindrische bzw. konische Hüllfläche. Die beiden Kopfabschnitte 26, 27 sind jedoch mit Drehsicherungs- und Positonierungsmittel 31 versehen. Diese sind durch um die Achse 13 herum verteilte, zu dieser parallelen Drehsicherungs- und Positionierungsnuten 32 gebildet. Diese sind im Querschnitt beispielsweise bogenförmig, U-förmig, viereckförmig oder V-förmig und haben also zur Achse 13 nicht-rotationssymmetrische Drehsicherungs- und Positonierungsflächen. Die Nuten 33 können alle gleich ausgebildet sowie gleich bemessen und gleichmässig um die Achse herum verteilt sein. Es können jedoch auch mehrere gleiche Nuten sowie eine breitere und/oder tiefere Nut vorhanden sein.

Das Implantat besitzt ferner ein zur Achse 13 koaxiales Sackloch 35, das in das freie Ende des Kopfs 25 mündet und einen Abschnitt mit einem annähernd bei der Mündung des Sacklochs beginnenden Innengewinde 36 hat.

Die Verpackung 3 weist einen länglichen Behälter 41 auf. Dieser besteht aus einem ersten, grösseren Behälterteil 42, nämlich einer ebenfalls mit 42 bezeichneten Ampulle und einen zweiten, kleineren Behälterteil 43, der im folgenden auch als Deckel 43 bezeichnet wird. Die beiden Behälterteile 42, 43 bestehen aus thermoplastischem Kunststoff, wobei mindestens der erste Behälterteil 42, d.h. die Ampulle, durchsichtig ist.

Die beiden Behälterteile 42, 43 haben im wesentlichen zylindrische Mäntel. Diese besitzen ineinander hineinragende, mit einem Innengewinde 44 bzw. einem Aussengewinde 45 versehene Abschnitte und sind bei diesen miteinander verschraubt und also lösbar miteinander verbunden. Die ineinander hineinragenden Abschnitte der beiden Behälterteile 42, 43 und deren Gewinde sind derart ausgebildet, dass der Innenraum des Behälters mindestens annähernd dicht und derart gegen die Umgebung abgeschlossen wird, dass keine Keime, Mikroorganismen und Viren aus der Umgebung in den Behälter-Innenraum eindringen können. Die beiden Behälterteile 41, 42 haben einen Boden 46 bzw. eine Deckwand 47. Der Boden ist mit einer kreisförmigen Vertiefung 48 und einigen beim Rand von deren Grund angeordneten Nocken 49 versehen.

Der Behälter 41 enthält eine innere, aus dem Behälter herausnehmbare Ampulle 51. Diese besteht aus einer Hülse mit einem zylindrischen Mantel, der am unteren Ende mit einem Boden verschlossen und am oberen Ende offen ist. Die innere Ampulle besteht aus thermoplastischem Kunststoff und ist durchsichtig. Das untere Ende der inneren Ampulle 51 ragt mit etwas Spiel in die Vertiefung 48 hinein und liegt auf den Nokken 49 auf. Das obere Ende des Mantels der inneren Ampulle 51 ragt ein wenig in den Mantel des Deckels 43 hinein und ist dort mit einem ringförmigen, nach aussen ragenden Vorsprung 52 versehen, der die innere Ampulle an der Innenfläche des Deckels radial abstützt und zentriert. Der Innenraum der inneren Ampulle 51 ist zum grössten Teil zylindrische, hat jedoch am oberen, offenen Ende eine kurze und kleine Erweiterung 53.

Der Behälter 41 enthält einen Halter 61, der das Dentalimplantat 11 lösbar hält, zusammen mit diesem aus dem Behälter 41 herausgenommen werden kann und als Eindreh- und/oder Einschlag und/oder Einpressinstrument für das Implantat dient. Der Halter 61 ist wie das Implantat, der Behälter 41 und die innere Ampulle im allgemeinen rotationssymmetrisch zur Achse 13. Der Halter 61 weist einen Schaft 62 und am oberen Ende einen radial über den Schaft hinausragenden Kopf 63 auf. Das untere Ende des Kopfs sitzt in der Erweitung 53 der inneren Ampulle. Die Erweiterung 53 bildet vorzugsweise einen leichten Press-Sitz für den Kopf und hält diesen leicht fest. Der Kopf 63 schliesst also das obere, offene Ende der inneren Ampulle 51 ab. Das obere Ende des Kopfs 63 steht annähernd an der Innenfläche der Deckwand 47 des Deckels 43 an, so dass der Kopf bei verschlossenem Behälter 41 nicht aus der Erweiterung 53 hinaus gelangen kann. Der Schaft 62 ist an seinem dem Kopf 63 abgewandten, unteren Ende mit einem in dieses mündenden, zur Achse 13 koaxialen und im allgemeinen rotationssymmetrischen, abgestuften Sackloch 64 versehen. Das Loch 64 hat am unteren Ende des Halters einen kurzen zylindrischen Lochabschnitt 65. Dieser ist im Querschnitt von einem dünnen und kurzen, im wesentlichen hohlzylindrischen, elastisch deformierbaren, insbesondere radial dehnbaren Schaft-Endabschnitt begrenzt, der Rast- und/oder Klemmittel bildet. Diese umschliessen die vom oberen Ende des trompetenförmigen Abschnitts 19 und den Aussenrand der konischen Schulterfläche 22 des Implantats gebildete, ringförmige Kante im Querschnitt, ragen in axialer Richtung ein wenig über die Kante hinab nach unten, stehen unter einer durch eine radiale, elastische Dehnung erzeugten Vorspannung und klemmen das Implantat 11 bei dessen Schulter 21 lösbar fest. An den zylindrischen Lochabschnitt 65 schliesst oben ein sich von der Mündung des Lochs weg nach oben verjüngender Lochabschnitt mit einer konischen Auflagefläche 69 an. Diese bildet mit der Achse 13 den gleichen Winkel wie die konische Schulterfläche 22 und liegt an dieser an. Auf das obere Ende der konischen Auflagefläche 69 folgt ein zur Achse 13 parallele Lochabschnitt 71. Dieser enthält mindestens einen Teil des Kopfs 25 des Implantats, ist im allgemeinen zylindrisch und führt und zentriert den Kopf mit kleinem radialem Spiel. Der Lochabschnitt 71 besitzt Drehsicherungsmittel 72, die durch achsparallele, längliche, rippenförmige Drehsicherungsvorsprünge gebildet sind, welche zur Achse 13 nicht-rotationssymmetrische Drehsicherungsflächen haben, in die Drehsicherungsnuten 33 im Kopf 25 des Implantats eingreifen und das Implantat bezüglich Drehungen um die Achse 13 drehfest mit dem Halter verbinden. Der Kopf 63 hat in der Nähe seines unteren Endes einen Bund 75, der in radialer Richtung über den restlichen Kopf hinausragt und mit einer beispielsweise durch Rändeln oder Kordeln gebildete Riffelung und/oder Aufrauhung 76 versehen ist. Der Halter 61 ist bei seinem vom Kopf 63 gebildeten Ende ferner mit Kupplungsmitteln 77 versehen, um den Halter lösbar und bezüglich Drehungen um die Achse 13 drehfest mit einem Eindreh- und/oder Einschlag- und/oder Einpress-Werkzeug zu verbinden. Der Kopf 63 des Halters 61 hat oberhalb des Bundes 75 einen zur Bildung von Kupplungsmitteln 77 dienenden, zylindrischen Abschnitt 78 mit gleichmässig entlang seinem Umfang verteilten, eingefrästen Ausnehmungen 79. Der zylindrische Abschnitt 78 ist derart ausgebildet, dass ein ringförmiges Kupplungsorgan einer als Eindreh-Werkzeug dienenden Ratsche von oben her über den zylindrischen Abschnitt 78 auf den Halter aufgesetzt werden kann und dann auf dem Bund 75 aufliegt sowie mit Mitnehmern in die Ausnehmungen 79 eingreift. Die Kupplungsmittel 77 weisen ferner ein zur Achse 13 koaxiales Sackloch 81 auf, das in das freie, dem Schaft 62 abgewandte Ende des Kopfs 63 mündet, mindestens zum Teil mehrkantförmig ist und einen mehrkantförmigen, beispielsweise vierkantförmigen, Lochabschnitt 82 sowie eine Ringnut 83 aufweist. Diese hält einen gummielastischen Ring 84, zum Beispiel einen O-Ring, der mindestens stellenweise aus der Ringnut 83 heraus zur Achse 13 hin ragt. Man kann ein Eindreh-Werkzeug mit einem mehrkantförmigen, in den Lochabschnitt 82 passenden Schlüssel in das Sackloch 81 stecken. Der Ring 84 klemmt dann den Schlüssel einigermaßen fest, wobei aber der Schlüssel selbstverständlich noch axial verschiebbar und wieder aus dem Sackloch 81 herausziehbar ist. Der Schaft 62, der Kopf 63, die Klemm- und oder Rastmittel 67, die Drehsicherungsmittel 72 und der ganze Halter 61 mit Ausnahme des gummielastischen Rings 84 bestehen aus einem einstückigen Körper aus thermoplastischem Kunststoff

Das Implantat 11 wird von dessen Herstellerin durch eine ungefähr axiale Verschiebung in das Loch 64 des Halters 61 gesteckt. Der Halter greift dann an der Aussenpartie 16 des Implantats an und klemmt dieses fest. Danach werden das Implantat und der Schaft 62 des Halters in die innere Ampulle 51 eingeführt, so dass der Kopf 63 des Halters 61 in die Erweiterung 53 der inneren Ampulle gelangt und diese verschliesst. Dann werden die innere Ampulle 51 und der Halter 61 in den Behälter 41 eingesetzt. Nach dem Verschliessen von diesem werden die an den Behälter-Innenraum angrenzenden Flächen des Behälters und alle in diesem enthaltenen Teile sterilisiert.

Wenn ein Zahnarzt das Dentalimplantat zum Halten und/oder Bilden eines Zahnersatzes verwenden weil, erstellt er in einem Knochen des Unter- oder Oberkiefers eines Patienten ein Loch zum Verankern des Implantats, schraubt den Deckel 43 vom ersten Behälterteil bzw. der (äusseren) Ampulle 42 ab und leert die innere Ampulle 51 mit dem in dieser sitzenden Halter auf eine Unterlage. Danach kann der Zahnarzt beispielsweise mit zwei Fingern den Kopf 63 des Halters fassen und den Kopf durch eine leichte seitliche Kraft kippen und von der inneren Ampulle lösen. Danach kann der Zahnarzt das vom Halter 61 gehaltene Implantat, ohne dieses zu berühren, mit dem Halter aus der inneren Ampulle herausziehen, in den Mund des Patienten einführen und das Implantat durch manuelles Drehen des Halters in das im Knochen angebrachte Loch eindrehen. Der Halter dient dabei als Eindreh-Instrument. Wenn das Implantat teilweise in den Knochen eingeschraubt ist, kann der Zahnarzt noch mit einem Eindreh-Werkzeug, beispielsweise einer Ratsche oder einem in das Sackloch 81 passenden Mehrkantschlüssel oder einem sogenannten "Floating"-Eindreh-Werkzeug, das einen in das Sackloch 81 passenden Schlüssel aufweist, am Halter angreifen und das Implantat durch Drehen des Halters festschrauben.

Bei einem alternativen Vorgehen kann der Zahnarzt bereits nach dem Öffnen des Behälters 41 eine Ratsche auf den Kopf 63 des Halters 61 aufsetzen oder den Halter lösbar mit einem anderen Eindreh-Werkzeug oder Instrument verbinden und den Halter sowie das von diesem gehaltene Implantat mit der Ratsche oder dem sonstigen Werkzeug oder Instrument in den Mund des Patienten und in den Knochen einsetzen.

Wenn das Implantat festgeschraubt und dessen Verankerungspartie 15 im Knochen verankert ist, kann man den an der Aussenpartie 16 des Implantats angreifenden Halter in ungefähr axialer Richtung vom Halter wegziehen und trennen. Das Implantat kann also mit wenigen, einfachen Arbeitsschritten aus der sterilen Verpackung 3 herausgenommen und in einen Knochen eingesetzt werden.

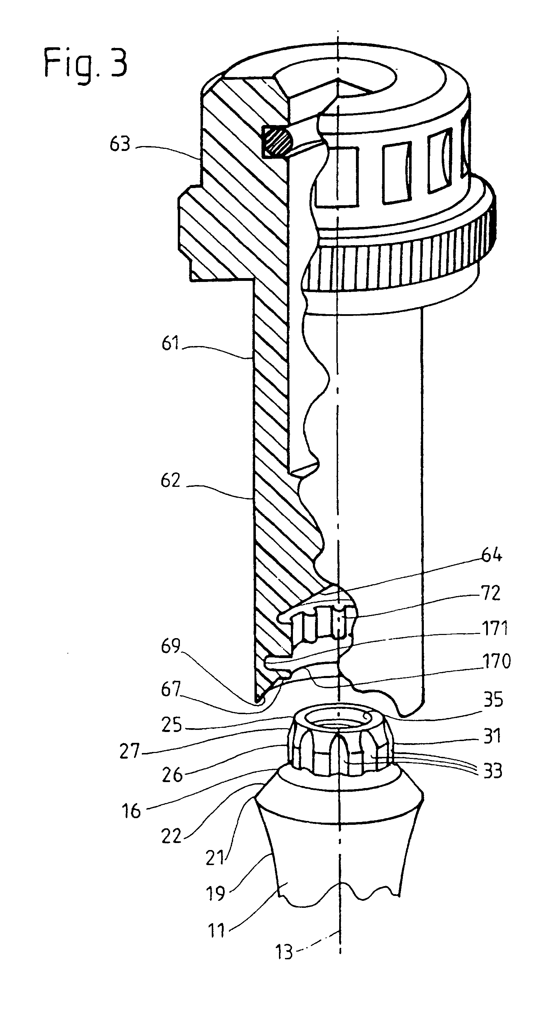

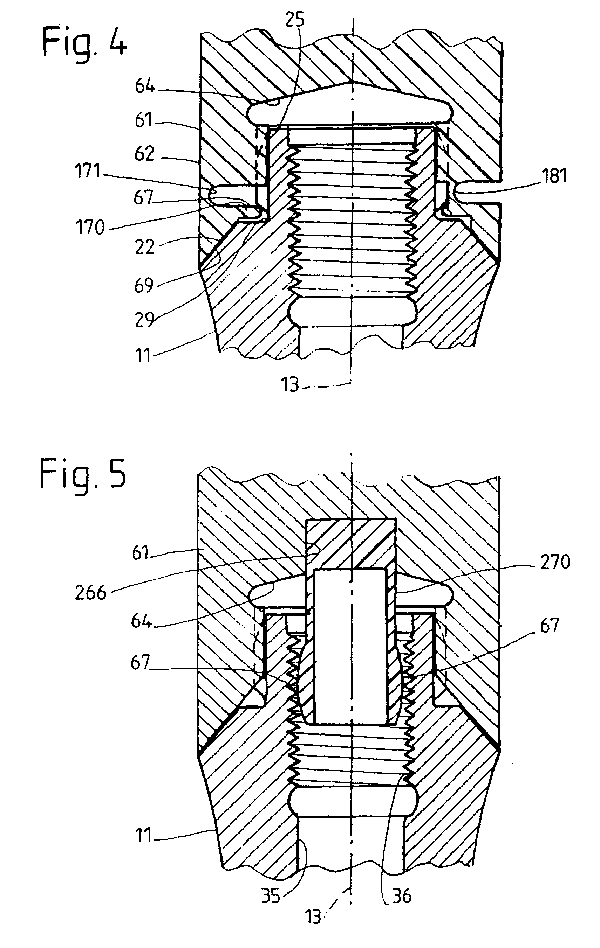

Das in den Figuren 3 und 4 ersichtliche Dentalimplantat 11 ist gleich ausgebildet wie das Implantat gemäss den Figuren 1 und 2. Der in Fig. 3 und in der linken Hälfte der Fig. 4 ersichtliche Halter 61 ist ebenfalls ähnlich ausgebildet wie der Halter 61 gemäss den Figuren 1 und 2, unterscheidet sich aber von diesem dadurch, dass sein Schaft nur bis zum äusseren Rand der konischen Schulterfläche 22 reicht und Klemm- und/oder Rastmittel 67 besitzt, die eine oberhalb der konischen Auflagefläche 69 angeordneten, ringförmigen Vorsprung 170 aufweisen. Dieser ist durch eine im Sackloch 64 vorhandene Ringnut 171 von den Drehsicherungsmitteln 72 des Halters abgegrenzt und hängt beim Grund dieser Ringnut 171 über einen relativ dünnen, elastisch deformierbaren Steg mit dem sich oberhalb des Vorsprungs 170 befindenden Teil des Halters 61 zusammen. Wenn der Schaft 62 des Halters 61 zum Verbinden mit dem Implantat 11 ungefähr parallel zur Achse 13 über dessen Kopf geschoben wird, verursacht der letztere eine vorübergehende elastische Deformation des unteren, freien Endabschnitts des Schafts. Dabei wird der ringförmige Vorsprung 170 der Klemm- und/oder Rastmittel 67 vorübergehende ein wenig erweitert und schnappt dann gemäss Fig. 4 in die Ringnut 29 des Implantats ein. Durch axiales Wegziehen des Halters 61 vom Implantat 11 kann der Vorsprung 170 wieder ausgerastet werden.

Der auf der rechten Hälfte der Fig. 4 gezeichnete Halter 61 ist weitgehend ähnlich ausgebildet wie der in der linken Figurenhälfte gezeichnete Halter, unterscheidet sich aber von diesem dadurch, dass er anstelle der im Sackloch 64 angebrachten Ringnut 171 eine aussen angebrachte Ringnut 181 aufweist.

Das Sackloch 64 des in Fig. 5 gezeichneten Halters 61 besitzt bei seinem inneren Ende einen zylindrischen Sitz 266. In diesem ist das obere Ende einer im allgemeinen zylindrischen Hülse 270 befestigt. Diese ist an ihrem unteren, freien Ende offen. Der sich bei diesem Ende der Hülse befindende Endabschnitt von dieser ist ein wenig verdickt, hat eine im Axialschnitt leicht konvex gebogene Aussenfläche, ist in ungefähr radialer Richtung elastisch deformierbar und bildet die Klemm- und/oder Rastmittel 67 des in Fig. 5 gezeichneten Halters 61. Wenn dieser mit dem Implantat 11 verbunden ist, ragt die Hülse in das Sackloch 35 des Implantats 11 hinein. Die vom unteren, freien Endabschnitt der Hülse gebildeten Klemm- und/oder Rastmittel 67 greifen dann am Innengewinde 36 des Sacklochs 35 an und klemmen das Implantat wegnehmbar fest.

Soweit vorgängig nichts anderes geschrieben wurde, können die in den Figuren 3 bis 5 gezeichneten Halter gleich oder ähnlich ausgebildet sein wie der anhand der Figuren 1 und 2 beschriebene Halter. Im übrigen kann man noch Merkmale der verschiedenen Halter miteinander kombinieren.

Ferner kann das Aussengewinde 18 des Implantats weggelassen und dessen Verankerungspartie 15 derart ausgebildet werden, dass sie parallel zur Achse in das Loch des Knochens hinein geschoben werden kann. Das Implantat kann dann beim Einsetzen in das Loch des Knochens nötigenfalls in einer gewünschten Drehstellung positioniert werden. Das Loch und die Verankerungspartie des Implantats können dann zudem derart bemessen und ausgebildet sein, dass das Implantat in das Loch hineingeschlagen und/oder hineingepresst werden muss. Zum Verankern des Implantats im Knochen kann man dann mit einem Einschlag- und/oder Einpress-Werkzeug auf den Kopf 63 des Halters 61 schlagen bzw. drücken. Der Halter 61 kann dann also als Einschlag- und/oder Einpressinstrument dienen. Im übrigen ist das Vorgehen zum Entnehmen des Implantats aus der Verpackung und zum Einsetzen des Implantats in einen Knochen ähnlich wie bei einem einschraubbaren Implantat, wobei die erfindungsgemässe Verpackung auch ähnliche Vorteile ergibt.

### Stückliste

### Figuren 1, 2 (und allgemeine Nummern)

- 1: Vorrichtung
- 3: Verpackung
- 11: Dentalimplantat
- 13: Achse
- 15: Verankerungspartie
- 16: Aussenpartie
- 17: zylindrischer Abschnitt
- 18: Aussengewinde
- 19: sich erweiternder, trompetenförmiger Abschnitt
- 21: Schulter
- 22: konische Schulterfläche
- 23: Ringfläche
- 25: Kopf
- 26: achsparalleler Kopfabschnitt
- 27: achsparalleler, konischer Kopfabschnitt
- 29: Ringnut
- 31: Drehsicherungs- und Positionierungsmittel
- 33: " " Positionierungsmittelnuten
- 35: Sackloch
- 36: Innengewinde
- 41: Behälter
- 42: erster Behälterteil (=Ampulle)
- 43: zweiter Behälterteil (=Deckel)
- 44: Innengewinde
- 45: Aussengewinde
- 46: Boden
- 47: Deckwand
- 48: Vertiefung
- 49: Nocken
- 51: innere Ampulle
- 52: Vorsprung
- 53: Erweiterung
- 61: Halter
- 62: Schaft
- 63: Kopf
- 64: Sackloch
- 65: Lochabschnitt
- 67: Klemm- und/oder Rastmittel
- 69: konische Auflagefläche
- 71: achsparalleler Lochabschnitt
- 72: Drehsicherungsmittel
- 75: Bund
- 76: Riffelung und/oder Aufrauhung
- 77: Kupplungsmittel
- 78: zylindrischer Abschnitt
- 79: Ausnehmung
- 81: Sackloch
- 82: mehrkantförmiger Lochabschnitt
- 83: Ringnut
- 84: Ring

### Figuren 3, 4 links

- 170: Rippen
- 171: Ringnut

### Figur 4 rechts

- 181: Ringnut

### Figur 5

- 266: Sitz
- 270: Hülse

## Patentansprüche

1. Verpackung mit einem zwei lösbar miteinander verbundene Behälterteile (42, 43) aufweisenden Behälter (41) und einen in diesem angeordneten Dentalimplantat (11), das eine zum Verankern in einem Knochen bestimmte Verankerungspartie (15) und eine zum Herausragen aus dem Knochen bestimmte Außenpartie (16) hat, wobei der Behälter (41) einen zusammen mit dem Dentalimplantat (11) aus dem Behälter (41) herausnehmbaren Halter (61) enthält, der mit dem eine Achse (13) aufweisenden Dentalimplantat (11) lösbar verbunden ist und an dessen Außenpartie (16) angreift, und wobei das Dentalimplantat (11) sowie der Halter (61) Drehsicherungsmittel zur gegenseitigen drehfesten Verbindung bezüglich der Achse (13) aufweisen,
**dadurch gekennzeichnet, daß** der Halter (61) das Dentalimplantat (11) lösbar haltende Klemm- und/oder Rastmittel (67) aufweist, und daß die Drehsicherungsmittel (31, 72) des Dentalimplantats (11) und des Halters (61) sowie die genannten Klemm- und/oder Rastmittel (67) derart ausgebildet sind, daß die Klemm- und/oder Rastmittel (67) und die Drehsicherungsmittel (72) des Halters (61) durch eine zur Achse (13) im wesentlichen parallele Verschiebung des Halters (61) vom Dentalimplantat (11) trennbar ist.

2. Verpackung nach Anspruch 1, **dadurch gekennzeichnet, daß** der Halter (61) Kupplungsmittel (77) aufweist, um den Halter (61) lösbar und bezüglich der Achse (13) drehfest mit einem Werkzeug und/oder Instrument zu verbinden.

3. Verpackung nach Anspruch 2, **dadurch gekennzeichnet, daß** die Kupplungsmittel (77) einem im allgemeinen zylindrischen Abschnitt (78) mit entlang von dessen Umfang verteilten Ausnehmungen 879) aufweisen.

4. Verpackung nach Anspruch 2 oder 3, **dadurch gekennzeichnet, daß** der Halter (61) ein dem Dentalimplantat (11) abgewandtes Ende und ein in dieses mündendes, zu den Kupplungsmitteln (77) gehörendes, mindestens zum Teil mehrkantförmiges Loch (81) aufweist.

5. Verpackung nach Anspruch 4, **dadurch gekennzeichnet, daß** das mindestens zum Teil mehrkantförmige Loch (81) des Halters (61) eine Ringnut (83) aufweist, die einen elastischen Ring (84) hält, der mindestens stellenweise aus der Ringnut (83) heraus zur Achse (13) hin ragt.

6. Verpackung nach einem der Ansprüche 1 bis 5, **dadurch gekennzeichnet, dass** der Halter (61) einen Schaft (62) und einen in radialer Richtung über diesen hinausragenden Kopf (63) hat, dass die Klemm- und/oder Rastmittel (67) in der Nähe des dem Kopf (63) abgewandten Endes des Schafts (62) angeordnet sind und dass der Kopf (63) mit einer Riffelung und/oder Aufrauhung (76) versehen ist, wobei der Schaft (62) die Klemm- und/oder Rastmittel (67) sowie der Kopf (63) vorzugsweise aus einem einstückigen Körper aus Kunststoff bestehen.

7. Verpackung nach einem der Ansprüche 1 bis 6, **dadurch gekennzeichnet, dass** das Dentalimplantat (11) an seinem der Verankerungspartie (15) abgewandten Ende einen Kopf (25) mit entlang seinem Umfang verteilten, zur Achse (13) nicht-rotationssymmetrischen, zu den Drehsicherungsmitteln (31) gehörenden Drehsicherungsflächen hat, die beispielsweise durch axiale Drehsicherungsnuten (33) gebildet sind, dass das Dentalimplantat (11) zwischen der Verankerungspartie (15) und dem Kopf (25) eine mit der Achse (13) einen Winkel bildende Schulterfläche (22) hat und dass der Halter (61) eine auf der Schulterfläche (22) aufliegende Auflagefläche (69) und ein den Kopf (25) mindestens stellenweise führendes Loch (64) und zu den Drehsicherungsmitteln (72) des Halters (61) gehörende, an Drehsicherungsflächen des Kopfs (25) angreifende Abschnitte hat.

8. Verpackung nach Anspruch 7, **dadurch gekennzeichnet, dass** die Klemm- und/oder Rastmittel (67) einen äusseren Rand der Schulterfläche (22) in axialer Richtung übergreifen und festhalten und/oder dass die Klemm- und/oder Rastmittel (67) in eine im Kopf (25) und/oder bei dessen Verbindung mit der Schulter (21) vorhandene Ringnut (29) eingreifen und/oder dass die Klemm- und/oder Rastmittel (67) an einem Innengewinde (36) eines axialen, in das freie Ende des Implantat-Kopfs (25) mündenden Lochs (35) des Implantats (11) angreifen.

9. Verpackung nach einem der Ansprüche 1 bis 8, **dadurch gekennzeichnet, dass** die Verankerungspartie (15) des Implantats (11) ein zum Einschrauben in ein Loch des Knochens bestimmtes Aussengewinde (18) aufweist oder zum achsparallelen Einführen in ein Loch des Knochens ausgebildet ist.

## Claims

1. A package comprising a container (41) having two container parts (42, 43) which are removably attached to each other and a dental implant (11) which is disposed in said container and which has an anchoring part (15) intended for anchoring in a bone (15) and an external part (16) intended for protruding from said bone, wherein the container (4 1 ) contains a holder (61) which can be removed from the container (41) together with the dental implant (11), which holder is removably attached to the dental implant, which comprises a spindle (13) and acts on the external part (16) thereof, and wherein the dental implant (11) and the holder (61) comprise rotational locking means for their mutual rotationally fixed attachment with respect to the spindle (13),
**characterised in that** the holder (61) comprises clamping and/or locking means (67) which removably hold the dental implant (11), and that the rotational locking means (31, 72) of the dental implant (11) and of the holder (61), as well as said clamping and/or locking means (67), are formed so that the clamping and/or locking means (67) and the rotational locking means (72) of the holder (61) can be separated from the dental implant (11) by a displacement of the holder (61) substantially parallel to the spindle (13).

2. A package according to claim 1, **characterised in that** the holder (61) comprises coupling means (77) in order removably to attach the holder (61), fixed in rotation with respect to the spindle (13), to atool and/or instrument.

3. A package according to claim 2, **characterised in that** the coupling means (77) comprise a generally cylindrical section (78) with recesses (79) distributed along the periphery thereof.

4. A package according to claim 2 or 3, **characterised in that** the holder (61) has an end facing away from the dental implant (11), and a hole (81), at least part of which is polygonal, which leads into said end and which forms part of the coupling means (77).

5. A package according to claim 4, **characterised in that** the hole (81) in the holder (61), at least part of which hole is polygonal, comprises an annular groove (83) which retains a flexible ring (84) which at least in places protrudes from the annular groove (83) towards the spindle (13).

6. A package according to any one of claims 1 to 5, **characterised in that** the holder (61) has a shank (62) and a head (63) which protrudes radially beyond the latter, that the clamping and/or locking means (67) are disposed in the vicinity of the end of the shank (62) remote from the head (63), and that the head (63) is provided with a ribbed and/or roughened profile (76), wherein the shank (62), the clamping and/or locking means (67) and the head (63) preferably consist of a one-piece body made of plastics material.

7. A package according to any one of claims 1 to 6, **characterised in that** at its end remote from the anchoring part (15) the dental implant (11) has a head (25) comprising rotational locking faces which are distributed along the periphery thereof, which are not rotationally symmetrical to the spindle (13), which form part of the rotational locking means (31), and which are formed, for example, by axial rotational locking grooves (33), that between the anchoring part (15) and the head (25) the dental implant (11) has a shoulder face (22) which forms an angle with the spindle (13), and that the holder (61) has a support face (69) which rests on the shoulder face (22) and a hole (64) which guides the head (25) at least in places, and has sections which form part of the rotational locking means (72) of the holder (61) and which act on rotational locking faces on the head (25).

8. A package according to claim 7, **characterised in that** the clamping and/or locking means (67) axially fit over and secure an outer edge of the shoulder face (22), and/or that the clamping and/or locking means (67) fit into an annular groove (29) which is present in the head (25) or which is present on the attachment thereof to the shoulder (21), and/or that the clamping and/or locking means (67) act on an internal screw thread (36) of an axial hole (35) in the implant (11) which leads into the free end of the implant head (25).

9. A package according to any one of claims 1 to 8, **characterised in that** the anchoring part (15) of the implant (11) comprises an external screw thread (18) intended for screwing into a hole in the bone, or is formed for introduction into a hole in the bone, parallel to the axis of said hole.

## Revendications

1. Emballage avec un récipient (41) comportant deux parties de récipient (42, 43) reliées entre elles de manière détachable, et un implant dentaire (11) qui est placé dans. celui-ci et qui possède une partie d'ancrage (15) destinée à être ancrée dans un os, et une partie extérieure (16) destinée à ressortir de l'os, le récipient (41) contenant un support (61) pouvant être extrait avec l'implant dentaire (11) du récipient (41), lequel support est relié de manière détachable à l'implant dentaire (11) présentant un axe (13), et est en prise sur sa partie extérieure (16), et l'implant dentaire (11) ainsi que le support (61) comportant des moyens de blocage en rotation pour la liaison solidaire en rotation réciproque par rapport à l'axe (13), **caractérisé en ce que** le support (61) comporte des moyens de serrage et/ou d'encliquetage (67) maintenant l'implant dentaire (11) de manière détachable, et **en ce que** les moyens de blocage en rotation (31, 72) de l'implant dentaire (11) et du support (61) ainsi que les moyens de serrage et/ou d'encliquetage (67) mentionnés sont réalisés de manière que les moyens de serrage et/ou d'encliquetage (67) et les moyens de blocage en rotation (72) du support (61) puissent être séparés de l'implant dentaire (11) par un coulissement du support (61) sensiblement parallèlement à l'axe (13).

2. Emballage selon la revendication 1, **caractérisé en ce que** le support (61) comporte des moyens de couplage (77) afin de relier le support (61) de manière détachable et solidairement en rotation par rapport à l'axe (13), avec un outil et/ou un instrument.

3. Emballage selon la revendication 2, **caractérisé en ce que** les moyens de couplage (77) comportent une portion (78) généralement cylindrique avec des évidements (79) répartis le long de son pourtour.

4. Emballage selon la revendication 2 ou 3, **caractérisé en ce que** le support (61) comporte une extrémité tournée à l'opposé de l'implant dentaire (11) et un trou (81) au moins en partie polygonal débouchant dans celle-ci et faisant partie des moyens de couplage (77).

5. Emballage selon la revendication 4, **caractérisé en ce que** le trou (81) au moins en partie polygonal du support (61) présente une gorge annulaire (83) qui maintient une bague (84) élastique laquelle ressort au moins par endroits de la gorge annulaire (83) vers l'axe (13).

6. Emballage selon l'une des revendications 1 à 5, **caractérisé en ce que** le support (61) possède une tige (62) et une tête (63) dépassant de celle-ci dans la direction radiale, **en ce que** les moyens de serrage et/ou d'encliquetage (67) sont disposés à proximité de l'extrémité, tournée à l'opposé de la tête (63), de la tige (62), et **en ce que** la tête (63) est pourvue de stries et/ou de rugosités (76), la tige (62), les moyens de serrage et/ou d'encliquetage (67) ainsi que la tête (63) étant constitués de préférence dans un corps d'une seule pièce en matière plastique.

7. Emballage selon l'une des revendications 1 à 6, **caractérisé en ce que** l'implant dentaire (11) possède, à son extrémité tournée à l'opposé de la partie d'ancrage (15), une tête (25) avec des surfaces de blocage en rotation réparties le long de son pourtour, ne présentant pas une symétrie de révolution par rapport à l'axe (13) et faisant partie des moyens de blocage en rotation (31), lesquelles surfaces sont formées par exemple par des gorges de blocage en rotation (33) axiales, **en ce que** l'implant dentaire (11) possède, entre la partie d'ancrage (15) et la tête (25), une surface d'épaulement (22) formant un angle avec l'axe (13), et **en ce que** le support (61) présente une surface d'appui (69), reposant sur la surface d'épaulement (22), et un trou (64) guidant au moins par endroits la tête (25), ainsi que des portions faisant partie des moyens de blocage en rotation (72) du support (61), en prise avec des surfaces de blocage en rotation de la tête (25).

8. Emballage selon la revendication 7, **caractérisé en ce que** les moyens de serrage et/ou d'encliquetage (67) recouvrent et maintiennent un bord extérieur de la surface d'épaulement (22) dans la direction axiale, et/ou **en ce que** les moyens de serrage et/ou d'encliquetage (67) s'engagent dans une gorge annulaire (29) prévue dans la tête (25) et/ou dans sa liaison avec l'épaulement (21), et/ou **en ce que** les moyens de serrage et/ou les moyens d'encliquetage (67) sont en prise dans un taraudage (36) d'un trou (35) axial, débouchant dans l'extrémité libre de la tête d'implant (25), de l'implant (11).

9. Emballage selon l'une des revendications 1 à 8, **caractérisé en ce que** la partie d'ancrage (15) de l'implant (11) présente un filetage extérieur (18)destiné au vissage dans un trou de l'os, ou est réalisée pour l'introduction parallèlement à l'axe dans un trou de l'os.
